# EUROPEAN PATENT SPECIFICATION

(11) **EP 2 952 871 B1**
(45) Date of publication and mention of the grant of the patent: **10.10.2018**
(21) Application number: 15168265.5
(22) Date of filing: 19.05.2015
(51) Int. Cl.: G01M 17/02

(54) **SYSTEM AND METHOD FOR MEASURING TIRE TREAD PROFILE**
SYSTEM UND VERFAHREN ZUR MESSUNG DES REIFENLAUFFLÄCHENPROFILS
SYSTÈME ET PROCÉDÉ DE MESURE DU PROFIL D'UNE BANDE DE ROULEMENT

(30) Priority: 02.06.2014 JP 2014114282
(43) Date of publication of application: 09.12.2015
(73) Proprietor: Sumitomo Rubber Industries, Ltd., Hyogo-ken (JP)
(72) Inventor: Maruoka, Kiyoto, Kobe-shi, Hyogo 651-0072 (JP); Ito, Tsuyoshi, Kobe-shi, Hyogo 651-0072 (JP); Ito, Satoshi, Kobe-shi, Hyogo 651-0072 (JP)
(74) Representative: Manitz Finsterwald Patentanwälte PartmbB

(56) References cited:
- EP-A1- 2 343 496
- WO-A1-2012/074527
- WO-A1-2015/133027
- US-A- 5 636 026

## Description

### Background of the invention

The present invention relates to a system and method for measuring a tire tread profile where a plurality of laser distance measuring devices are simultaneously used to measure a tread profile of a tire.

In Japanese Patent Application Publication No. 2006-153555, a tool for measuring a radius of curvature of a tire tread surface is disclosed, wherein the tool has three probes for contacting the tread surface to mechanically obtain relative positions of three points on the tread surface in order to find a radius of a circle passing the three point as the radius of curvature.

Instead of such tool for mechanically obtaining positions of three points on a tread surface, the use of laser distance meters is conceivable as a noncontact measuring device. However, a laser distance meter usually has a strong temperature dependency and output data about the measured distance varies wide depending on the temperature around the laser distance meter. Further, if a plurality of laser distance meters are simultaneously used, there is a tendency that, due to the variations of output data of the respective laser distance meters, large errors are involved in the differences among the measured distances. This reduces the accuracy of the radius of curvature computed therefrom.

US 5,636,026 discloses a system for measuring a profile of the tread portion of a tire comprising a laser distance measuring device oriented toward the tread portion of the tire in order to measure the distance to the tread portion, with an insulating wall enclosing the laser distance measuring device and provided with an aperture through which the laser beam of the laser distance measuring device can pass.

WO 2012/074527 discloses a system for measuring a tread profile of a tire comprising a tire holding device for supporting the tire rotatably around the tire rotational axis and a plurality of laser distance measuring devices arranged along the axial direction of the tire and oriented toward the tread portion of the tire.

### Summary of the Invention

It is therefore, an object of the present invention to provide a system and method for measuring a tread profile of a tire, in which data about a tread profile e.g. a tread radius of curvature can be measured accurately without being affected by a temperature dependency of a laser distance measuring device.

A system according to the present invention for measuring a tread profile of a tire comprises
a tire holding device comprising a tire support shaft for supporting the tire rotatably around the tire rotational axis,
a plurality of laser distance measuring devices arranged along the axial direction of the tire and oriented toward the tread portion of the tire in order to measure distances to the tread portion,
an insulating wall enclosing the laser distance measuring devices, wherein the insulating wall is provided with an aperture through which laser beams of the laser distance measuring devices can pass, and a shutter configured to close the aperture, and
a temperature controller for controlling the temperature of a gas surrounding the laser distance measuring devices in the insulating wall
wherein the temperature controller includes a cooling system and is configured to continuously supply temperature controlled air to the interior of the insulating wall when the aperture is uncovered by taking off the shutter.

A method according to the present invention for measuring a tread profile of a tire utilizes the above-mentioned system for measuring a tread profile of a tire, and comprises a process for keeping the temperature of the gas surrounding the laser distance measuring devices in the insulating wall at a substantially constant temperature by the use of the temperature controller so as to reduce variations of data output from the laser distance measuring devices due to variations of the temperature of the laser distance measuring devices.

### Brief Description of the Drawings

Fig. 1 is a perspective view of a system for measuring a tread profile as an embodiment of the present invention.
Fig. 2 is a schematic plan view thereof.
Fig. 3 is a perspective view of the laser measuring apparatus showing a state in which the shutter is opened.
Fig. 4 is a perspective view of the laser measuring apparatus showing a state in which the shutter is closed.
Fig. 5 is a schematic side view of the laser measuring apparatus showing the internal structure thereof.
Fig. 6 is a perspective view for explaining a filtering function of a wide laser beam.
Fig. 7 is a diagram for explaining a measuring process for determining a first tread radius TRs and a measuring process for determining a second tread radius TRM.
Figs. 8(A) and 8(B) are diagrams for explaining a calibration process for the laser measuring apparatus.

### Description of the Preferred Embodiments

Embodiments of present invention will now be described in detail in conjunction with accompanying drawings.

According to the present invention, a system 1 for measuring a tread profile of a tire T comprises a tire holding device 2, and a laser measuring apparatus 3.

The tire T as an object to be measured is a pneumatic tire, for example, a passenger car tire provided in the tread surface Ts with circumferentially extending ribs R, for example, a center rib Rc, two middle ribs Rm, and two axially outermost shoulder ribs Rs.

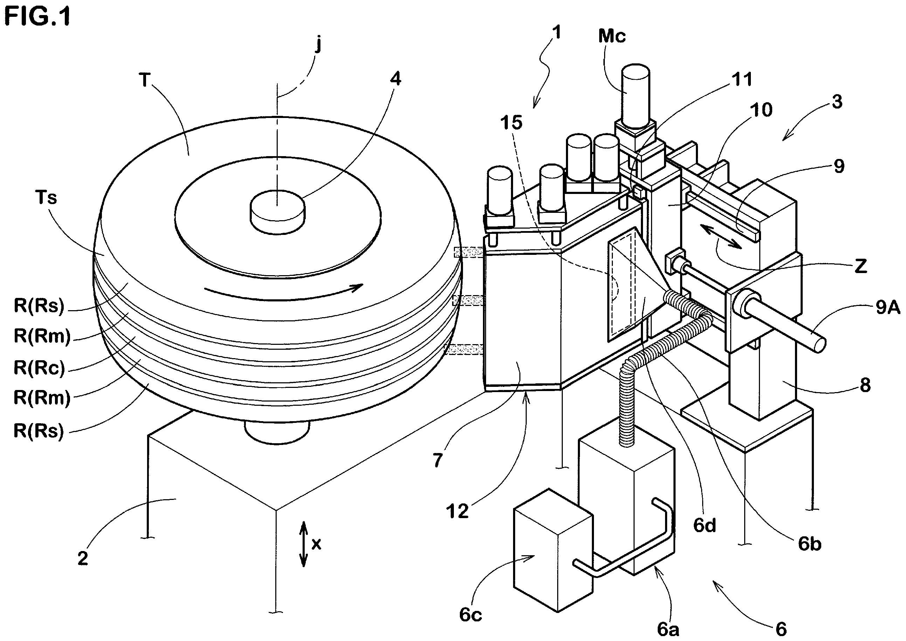

The tire holding device 2 comprises, as shown in Fig.1, a tire support shaft 4 for supporting the tire T rotatably around the tire rotational axis j.

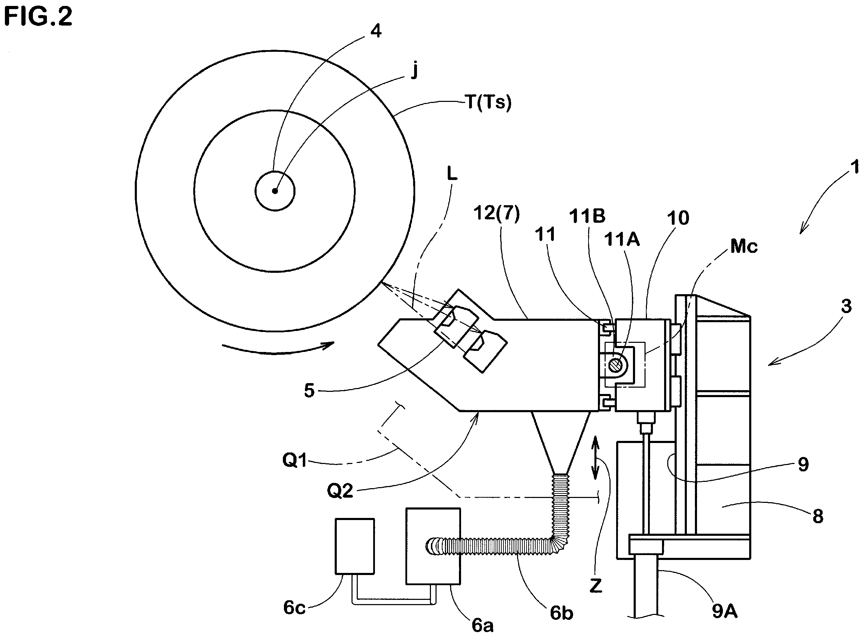

In this example, as shown in Figs.1 and 2, the tire T which is mounted on a rim is horizontally supported by the tire support shaft 4. But, it is also possible to configure the system 1 for measuring a tread profile such that the tire support shaft 4 supports the tire T vertically.

The tire holding device 2 further comprises
a drive unit (not shown) for rotating the tire support shaft 4 at a predetermined rotational speed which comprises a motor such as electric motor.

Instead of the drive unit for rotating the tire support shaft 4, it may be possible to use a road wheel which is driven to rotate and to which the tread portion of the tire T is pressed so that the tire T is rotated thereby.

The laser measuring apparatus 3 comprises:
at least three (in this embodiment five) laser distance measuring devices 5 for measuring radial distances to the tread surface Ts of the held tire T from their respective positions;
an insulating wall 7 enclosing the laser distance measuring devices 5;
a temperature controller 6 for controlling the temperature of gas (air) in the interior of the insulating wall 7; and
a computing device (not shown) for calculating the tread profile based on data about the radial distances measured by the laser distance measuring devices 5.
In this example, the laser measuring apparatus 3 further comprises:
a main frame 8;
a first movable frame 10 supported by the main frame 8 through a guide device 9 movably in a direction perpendicular to the tire axial direction X; and
a second movable frame 12 supported by the first movable frame 10 through a guide device 11 movably in the tire axial direction X.

The temperature controller 6 comprises an air-conditioning and heating machine 6a, and an air duct 6b for sending the air whose temperature is controlled by the air-conditioning and heating machine 6a toward the laser distance measuring devices 5 in order to keep the air surrounding the laser distance measuring devices 5 within a narrow range, preferably at a predetermined constant temperature. Incidentally, a flexible stretchable duct made from accordion-folding material is used an the air duct 6b, for example.

On the second movable frame 12, the laser distance measuring devices 5 and the insulating wall 7 are mounted.

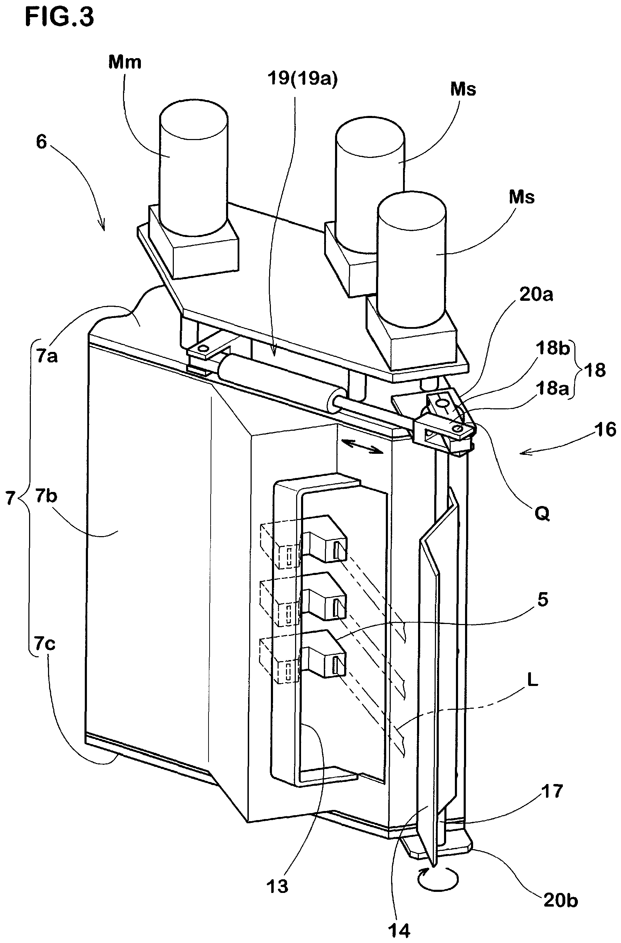

As shown in Fig. 3, the insulating wall 7 in this example includes an upper wall 7a above the laser distance measuring devices 5, a lower wall 7c under the laser distance measuring devices 5, and a side wall 7b extending between the upper wall 7a and the lower wall 7c. The insulating wall 7 encloses all of the laser distance measuring devices 5.

Preferably, the insulating wall 7 is formed from a material or materials having heat insulation property in order to effectively keep the temperature of the interior constant.

The insulating wall 7 is provided with
a aperture 13 through which the laser beams L of the laser distance measuring devices 5 pass,
a shutter 14 for closing/opening the aperture 13, and
an inlet 15 for taking the air supplied from the temperature controller 6 into the interior.

In this embodiment, the aperture 13 and the inlet 15 are formed in the side wall 7b.

To the inlet 15, the above-mentioned air duct 6b is connected through a flared part 6d whose cross sectional area is gradually increased toward the inlet 15 as shown in Fig. 1 in order that the conditioned air is distributed evenly across the inside of the insulating wall 7.

The shutter 14 is made of, for example, a metal material. Preferably. a sheet of heat insulating material is applied to one side of the shutter 14.

In this example, the shutter 14 is formed from a plate material which is folded to have a Z-shaped cross section as shown in Fig. 3.

On the second movable frame 12, a shutter opening/closing device 16 for opening/closing the shutter 14 is mounted.

In this embodiment, the shutter opening/closing device 16 comprises a rotatable shaft 17 and an actuator 19 for rotating the rotatable shaft 17.

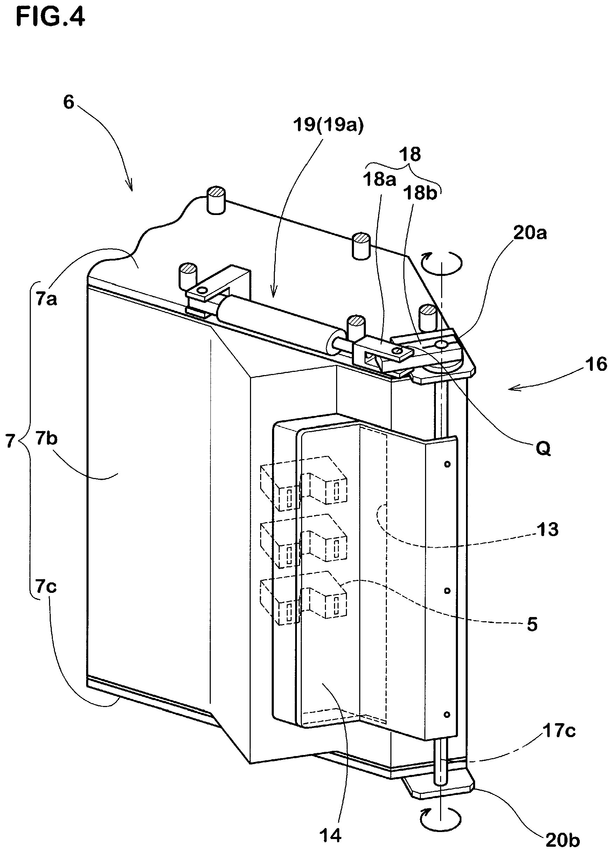

In this example, as shown in Fig. 3 and Fig. 4, both ends of the rotatable shaft 17 are respectively supported by a support piece 20a provided on the upper wall 7a and a support piece 20b provided on the lower wall 7c so that the rotatable shaft 17 extends in the vertical direction along the side wall 7b.

The shutter 14 is fixed to the rotatable shaft 17 by an appropriate means, for example, rivet, welding, screw, press fitting or the like.

The actuator 19 in this example is a cylinder 19a having a piston rod. The piston rod is connected to the rotatable shaft 17 through a linkage 18. The linkage 18 is made up of a link 18a one end of which is fixed to the piston rod of the actuator 19 and a link 18b one end of which is fixed to one end of the rotatable shaft 17, and
the other end of the link 18a and the other end of the link 18b are pivotally connected to each other.
The end of the actuator 19 on the opposite side of the piston rod is pivotally supporting by the upper wall 7a of the insulating wall 7.
Therefore, by the extension of the cylinder 19a, the rotatable shaft 17 is rotated through the linkage 18 so that the shutter 14 opens the aperture 13.
By the retraction of the cylinder 19a, the rotatable shaft 17 is rotated so that the shutter 14 closes the aperture 13.

Aside from such cylinder 19a actuated by pressurized fluid, it is also possible to use, as the actuator 19,
a mechanical linear actuator such as a ball screw in combination with the linkage,
a geared motor coupled with the rotatable shaft 17 or the like

In this embodiment, as shown in Fig. 2, the guide device 9 comprises a guide rail extending straight in the direction Z, and a guide groove slidably fitted with the guide rail. The guide device 11 comprises a guide rail extending straight in the direction X, and a guide groove slidably fitted with the guide rail. of course, the guide device 9,11 is not limited to this rail-and-groove structure. Any suitable structures may be employed.

For the guide device 9, a moving device is provided which comprises a cylinder 9A mounted on the main frame 8 such that its piston rod is capable of extending and retracting in the direction Z, and the piston rod is connected to the first movable frame 10. Therefore, by the extension and retraction of the cylinder 9A, the first movable frame 10 is moved in the direction Z between the waiting position Q1 and the measuring position Q2.

For the guide device 11, a moving device is provided which comprises
a ball screw shaft 11A (Fig. 2) pivotally supported by the first movable frame 10 so as to extend in the tire axial direction X, a motor Mc for rotating the ball screw shaft 11A, and
a ball nut 11B engaging with the ball screw shaft 11A and fixed to the second movable frame 12.
Therefore, by rotating the ball screw shaft 11A with the motor MC, the second movable frame 12 is moved in the tire axial direction X

The laser distance measuring devices 5 are arranged at intervals in the tire axial direction X.

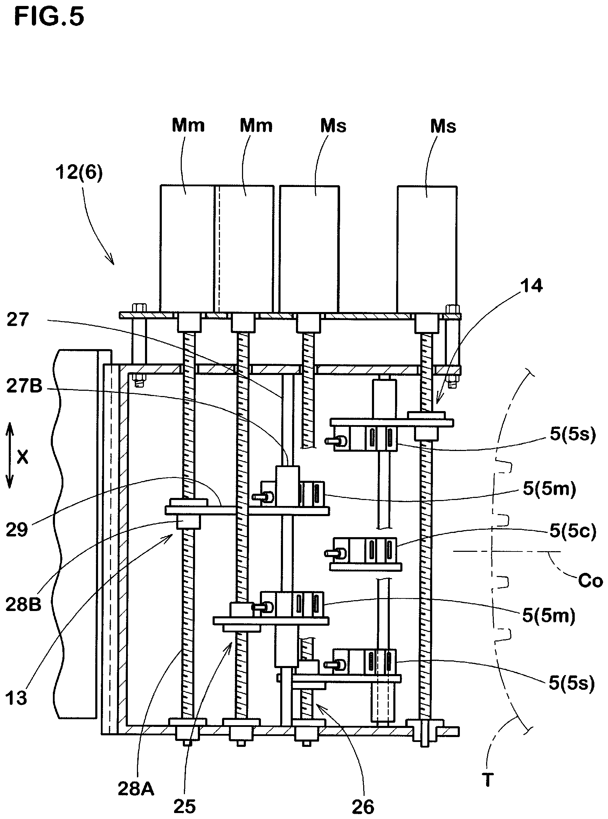

In this embodiment, as shown in Fig. 5, five laser distance measuring devices 5 are arranged, which are a central laser distance measuring device 5c, two middle laser distance measuring devices 5m one disposed each side thereof, and two outer laser distance measuring devices 5s disposed axially outside the respectively middle laser distance measuring devices 5m.

The central laser distance measuring device 5c is fixed to the second movable frame 12 and is movable in the tire axial direction X together with the second movable frame 12.

Each of the middle laser distance measuring devices 5m is supported by the second movable frame 12 through a guide device 25 so that each of the middle laser distance measuring devices 5m is movable in the tire axial direction X relatively to the central laser distance measuring device 5c.

Each of the outer laser distance measuring devices 5s is supported by the second movable frame 12 through a guide device 26 so that each of the outer laser distance measuring devices 5s is movable in the tire axial direction X relatively to the central laser distance measuring device 5c as well as the middle laser distance measuring devices 5m.

In this embodiment, as shown in Fig. 5, the guide devices 25 for the respective middle laser distance measuring devices 5m include a single guide shaft 27 in common.
Also, the guide devices 26 for the respective outer laser distance measuring devices 5s include a single guide shaft 27 in common.
Both ends of each guide shaft 27 are respectively fixed to an upper part and lower part of the second movable frame 12 so that the guide shaft 27 extends in the direction X.

Each of the guide devices 25 and 26 comprises:
a slider part provided with a guide hole 27B through which the guide shaft 27 passes slidably and fixed to an attaching plate 29 to which one laser distance measuring device 5m, 5s is fixed;
a ball nut 28B attached to the attaching plate 29;
a ball screw shaft 28A engaging with the ball nut 28B; and
a motor (Mm for 5m, Ms for 5s) for rotating the ball screw shaft 28A. Therefore, the laser distance measuring device 5m, 5s is slidably supported by the guide shaft 27.
By rotating the ball screw shaft 28A with the motor Mm, Ms, the laser distance measuring device 5m, 5s is moved in the tire axial direction X independently from the others.

Thus, by moving the second movable frame 12, the position of the central laser distance measuring device 5c can be adjusted to a reference position which is for example set on the tire equator Co.
The positions of the middle laser distance measuring devices 5m and the positions of the outer laser distance measuring devices 5s can be separately adjusted to suitable measuring positions in relation to that of the central laser distance measuring device 5c according to the tire size, the tread pattern and the like.

At the measuring position Q2, as shown in Fig. 2, the laser distance measuring devices 5 are arranged so that the center axes of the laser beams L from the respective devices 5 are arranged in a line parallel with the tire axial direction X and within a single plane extending radially outwardly from the tire rotational axis j, in other words, a single plane including the tire rotational axis j.

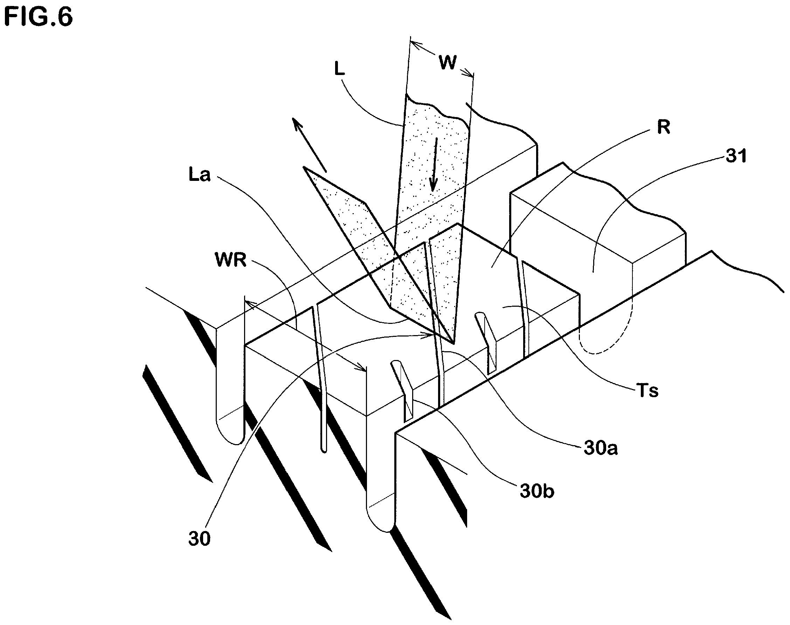

As to the laser distance measuring devices 5, it is desirable to use a laser distance measuring device capable of irradiating the laser beam L having a width w of not less than 5 mm as shown in Fig. 6.
By using such a laser distance measuring device 5, owing to so called filtering function of the laser distance measuring device itself, a negative effect of a small irregularity 30 of the tread surface Ts (for example, resulted from a sipe 30a, slot 30b or the like) which exists well within the irradiation part La corresponding to the width w of the laser beam L can be removed from the measuring result.
If the irregularity 30 is large, for example, the irregularity 30 is an axial groove 31, and there is a possibility that the entire irradiation part La is included in the groove 31, the measuring result becomes noise data or invalid data. Such invalid data is removed through the after-mentioned smoothing processing by the use of a computing device.

According to the present invention, a method for measuring a tread profile comprises a temperature controlling process SA and a measuring process SB.

In the temperature controlling process SA, the temperature of the inside of the insulating wall 7 enclosing the laser distance measuring devices 5 is controlled by the use of the temperature controller 6 so that the temperature of the gas or air around the laser distance measuring devices 5 is kept substantially constant in order to reduce variations of output data of the laser distance measuring devices 5 and accurately measure the tread profile.

The temperature controlling process SA comprises: closing the aperture 13 of the insulating wall 7 with the shutter 14; and uncovering the aperture 13 by taking off the shutter 14. By activating the actuator 19, in this embodiment, by retracting the rod of the cylinder 19a, the linkage 18 rotates the rotatable shaft 17 together with the shutter 14 and the aperture 13 is closed. Further, by extending the rod of the cylinder 19a, the rotatable shaft 17 is rotated together with the shutter 14 and the aperture 13 is uncovered.

On the other hand, the temperature of the air in the interior of the insulating wall 7 is controlled by the temperature controller 6. It is desirable that the temperature is kept within a range between a preset value + 1 degree C and the preset value - 1 degree C in order that the variations of the output data of the laser distance measuring devices 5 due to their temperature dependency can be surely eliminated. For example, the preset value for the temperature, namely, the target temperature is 22 to 28 degrees C., preferably 24 to 26 degrees C., more preferably 25 degrees C.

In this embodiment, the indoor air existing outside the insulating wall 7 is drawn into the air-conditioning and heating machine 6a of the temperature controller 6, and temperature controlled, and then sent into the interior of the insulating wall 7 through the inlet 15.
of course, it is also possible to construct the temperature controller 6 as a circulation type such that the air existing in the interior of the insulating wall 7 is drawn into the air-conditioning and heating machine 6a and then the temperature controlled air is returned to the interior of the insulating wall 7.

During the aperture 13 is uncovered by taking off the shutter 14, the interior of the insulating wall 7 is continuously supplied with the temperature controlled air from the temperature controller 6.

During the aperture 13 is uncovered, the above-mentioned tread profile measuring process SB is carried out.

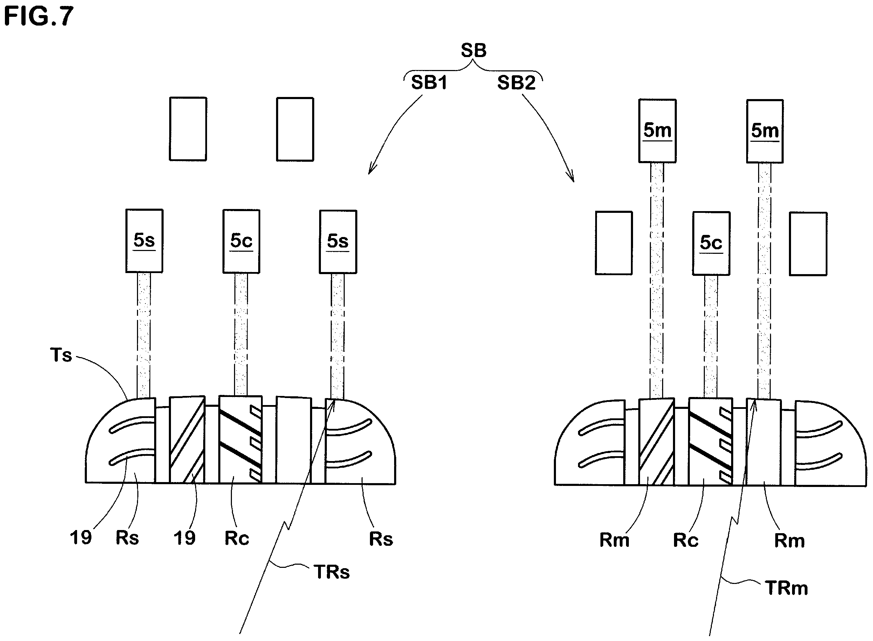

In this embodiment, the tread profile measuring process SB is for determining a tread radius TR. Further, as shown in Fig. 7, the process SB in this embodiment includes: a measuring process SB1 for determining a first tread radius TRs based on the measurements at the tread center (center rib Rc in this example) and two tread shoulder portions (two axially outermost shoulder ribs Rs in this example), and a measuring process SB2 for determining a second tread radius TRm based on the measurements at the tread center and two tread middle portions (two middle ribs Rm in this example).

According to conditions under which a tire is used, for example, whether the automobiles have to drive on the left-hand side or right-hand side, and whether or not the road surfaces are generally semicylindrically curved for rainwater drainage, the first tread radius TRs is useful for predicting the steering stability in some countries whereas the second tread radius TRm is useful for predicting the steering stability in other countries. Thus, it is preferably to measure the first and second tread radii TRs and TRm.

Each tread profile measuring process SB, SB1, SB2 comprises a measuring step, an averaging step, and a computing step.

In the measuring step, by the use of three of the five laser distance measuring devices 5, radial distances measured from these laser distance measuring devices 5 to the tread surface Ts of the tire T are measured at a number m of circumferentially different measuring positions while rotating the tire around its rotational axis. Thereby,
a first set of distance data y1 (y11, y12, y13 --- y1m) are obtained from the first laser distance measuring device 5, a second set of distance data y2 (y21, y22, y23 --- y2m) are obtained from the second laser distance measuring device 5 and a third set of distance data y3 (y31, y32, y33 --- y3m) are obtained from the third laser distance measuring device 5.

For example, in the case of the measuring process SB1 for determining the first tread radius TRs,
distance data y1 (y11-y1m) from the central laser distance measuring device 5c to the tread center (center rib Rc) are obtained,
distance data y2 (y21-y2m) from one of the outer laser distance measuring devices 5s to the tread shoulder portion (the opposite shoulder rib Rs) are obtained, and
distance data y3 (y31-y3m) from the other outer laser distance measuring device 5s to the other tread shoulder portion (the opposite shoulder rib Rs) are obtained.

In the averaging step, firstly,
for each set of the number m of distance data y, namely, a first set of distance data y11-y1m, a second set of distance data y21-y2m, and a third set of distance data y31-y3m,
a smoothing processing is carried out, which is for removing therefrom the above-mentioned invalid data resulting from large irregularity 30 (such as the axial groove 31 in this example).

Then, each set of the distance data y1, y2, y3 excluding the invalid data if any, are averaged to obtain an average value y1N, y2N, y3N.

The smoothing processing carried out for each set n (n=1, 2, 3) of the number m of radial distance data yn1-ynm is as follows. (hereinafter each of the number m of the data or each measured distance is expressed as yn[i] wherein i=1, 2, 3 -- m in chronological order)
The number m is, for example, set to be not less than 500.

For each data yn[i], a moving average yN[i] of a fixed number k of the previous data yn[i-1] through yn[i-k] is obtained. The moving average yN[i] is obtained as (summation of yn[i-1] through yn[i-k])/k.

If the difference between yn[i] and yN[i] is larger than a predetermined threshold value, yn[i] is removed as invalid data from the set n of the distance data yn.

If k >= i, then instead of the number k of the previous data yn[i-1] through yn[i-k], yn[i-1] through yn[1] and yn[m] through yn[m-(k-i)] are used.

As to the threshold value, preferably set is a value more than the expected maximum magnitude of Radial Run Out (RR0) of the tire and less than the depth of the axial groove 31 included in the measuring portion (for example ribs R). For example, a value of about 3.0 mm is set to the threshold value.

In the computing step, the tread radius TR is obtained as a radius of a circle passing through three points on the tread surface.

In a x-y coordinate plane of which x-axis is in the tire axial direction X and y-axis is in the direction Y, the Y-coordinate values of the three points are given by the above-mentioned three average values y1N, y2N and y3N. The X-coordinate values of the three points are given by distances x1, x2 and x3 of the laser distance measuring devices 5 relating to the average values y1N, y2N and y3N, respectively, which are measured in the tire axial direction from a reference position X (reference position X can be arbitrary defined) in the tire axial direction. Thus, the three points are expressed as P1(x1,y1N), P2(x2,y2N) and P3(x3,y3N).
The radius of a circle passing through P1(x1,y1N), P2(x2,y2N) and P3(x3,y3N) is computed as the tread radius TR.

The averaging step including the smoothing processing and the computing step are implemented by the computing device.

Each tread profile measuring process SB, SB1, SB2 is implemented as explained above. In the case where the measuring process SB1 and the measuring process SB2 are implemented, it is not necessary to implement these processes SB1 and SB2 one after the other. It is possible to implement the processes SB1 and SB2 at the same time. In this case, the data and processing in connection with the central laser distance measuring device 5c can be sheared between the processes SB1 and SB2.

After the measuring step of the tread profile measuring process SB, the aperture 13 is closed so that the air in the interior of the insulating wall 7 is kept at the preset temperature. As described above, during the aperture 13 is uncovered, namely, during measuring the distances, it is desirable that the interior of the insulating wall 7 is supplied with the temperature controlled air from the temperature controller 6.

In the closed state of the aperture 13, the tire T held by the tire holding device 2 is exchanged for the next tire to be measured .

Preferably, the number m of the circumferentially different measuring positions corresponding to the number of a set of distance data is not more than 2000. Even if the number m is increased over 2000, the accuracy of the measured tread profile reaches a ceiling whereas the computational time and cost increase. If the number m is less than 500, there is a possibility that the accuracy is decreased, in particular, in the case of a tread pattern including a large number of axial grooves (large irregularity 30).

The number k of the previous data is at least 2 and preferably at most 100. Even if the number k is increased over 100, the effect of the smoothing processing reaches a ceiling whereas the computational time and cost increase.

The number of revolutions of the tire T during measuring the radial distances with the laser distance measuring devices 5 is set in a range of from 20 to 3000 rpm for example.

Preferably, the width w of the laser beam L is not less than 10 % and not more than 70 % of the width WR of the rib R as the measuring object in order to effectively utilize the above-mentioned filtering function of the laser distance measuring device itself. If the width W of the laser beam L is less than 10 % of the rib width WR or less than 5 mm, it becomes difficult to filter out the irradiation part La such as sipe 30a and cut 30b. If the width w is more than 70 % of the rib width WR, there is a possibility that the laser beam L scans off the edge of the rib R, and the variation of the output data of the laser distance measuring device 5 is increased.

According to the present invention, at least three laser distance measuring devices 5 are used simultaneously. Therefore, it is preferable that the method for measuring the tread profile include a calibration process for calibrating the laser distance measuring devices before measuring the tread profile, using a calibration tool 35.

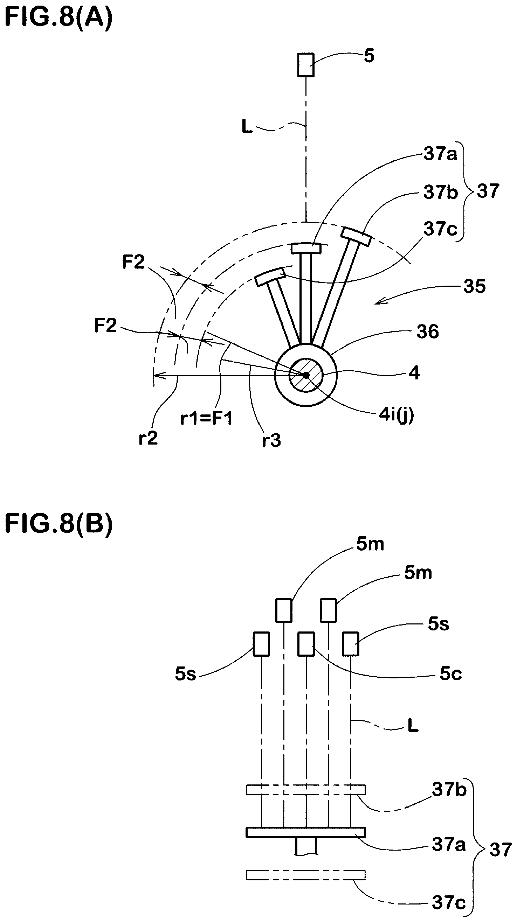

As schematically shown in Fig. 8, the calibration tool 35 comprises a cylindrical base part 36 supported by the tire support shaft 4 coaxially therewith and rotatably therearound, and a plurality of reflector plates 37 fixed to the base part 36.

The reflector plates 37 are arranged around the tire support shaft 4 at intervals as shown in Fig. 8(A).
Each reflector plate 37 has a reflecting surface extending along the tire support shaft 4 to cover all of the laser distance measuring devices 5 as shown in Fig. 8(B).
The reflecting surfaces of the reflector plates 37 are placed at different radial distances from the axis 4i of the tire support shaft 4 corresponding to the tire rotational axis j. Each reflecting surface is preferably formed by a part of the surface of a circular cylinder which is coaxial with the tire support shaft 4 in order to facilitate the position adjustment for the reflector plate 37.
In this embodiment, the reflector plates 37 are
a first reflector plate 37a having a reflecting surface at a radial distance F1 from the axis 4i of the tire support shaft 4 corresponding to the tire rotational axis j,
a second reflector plate 37b having a reflecting surface at a radial distance F2 larger than the radial distance F1 of the first reflector plate 37a, and
a third reflector plate 37c having a reflecting surface at the radial distance F3 smaller than the radial distance F1 of the first reflector plate 37a.
As explained above, the reflecting surfaces of the first-third reflector plates 37a, 37b and 37c are defined by circular cylinders whose radii are r1, r2 and r3, respectively, namely, r1=F1, r2=F1+F2 and r3=F1-F2.

In the calibration process, the first reflector plate 37a is positioned at the measuring position, and by the use of the first reflector plate 37a, the origin of each laser distance measuring device 5 is calibrated.
Then, the calibration tool 35 is rotated so that the second and third reflector plates 37b and 37c are alternately positioned at the measuring position, and by the use of the second and third reflector plates 37b and 37c, each laser distance measuring device 5 is calibrated for the observed data.

While description has been made of one particularly preferable embodiment of the present invention, the illustrated embodiment should not be construed as to limit the scope of the present invention; various modifications are possible without departing from the scope of the present invention.

### Reference Signs List

- 1: system for measuring a tread profile of a tire
- 5: laser distance measuring device
- T: tire
- 6: temperature controller
- 7: insulating wall
- 13: aperture
- 14: shutter

## Claims

1. A system (1) for measuring a tread profile of a tire (T) comprising
a tire holding device (2) comprising a tire support shaft (4) for supporting the tire (T) rotatably around the tire rotational axis (j),
a plurality of laser distance measuring devices (5) arranged along the axial direction of the tire (T) and oriented toward the tread portion of the tire (T) in order to measure distances to the tread portion, **characterised in that** the system further comprises an insulating wall (7) enclosing the laser distance measuring devices (5),
the insulating wall (7) provided with an aperture (13) through which laser beams (L) of the laser distance measuring devices (5) can pass, and a shutter (14) configured to close the aperture (13), and
a temperature controller (6) for controlling the temperature of a gas surrounding the laser distance measuring devices (5) in the insulating wall (7),
wherein the temperature controller (6) includes a cooling system and is configured to continuously supply temperature controlled air to the interior of the insulating wall (7) when the aperture (13) is uncovered by taking off the shutter (14).

2. A method for measuring a tread profile of a tire (T) by the use of the system (1) as set forth in claim 1, comprising
keeping the temperature of the gas surrounding the laser distance measuring devices (5) in the insulating wall (7) at a substantially constant temperature by the use of the temperature controller (6) so as to reduce variations of data output from the laser distance measuring devices (5) due to variations of the temperature of the laser distance measuring devices (5).

3. The method for measuring a tread profile of a tire (T) according to claim 2, wherein said substantially constant temperature is a preset targeted temperature plus/minus 1 degree C.

## Patentansprüche

1. System (1) zum Messen eines Laufflächenprofils eines Reifens (T), umfassend
eine Reifenhaltevorrichtung (2), die eine Reifenlagerwelle (4) zum drehbaren Lagern des Reifens (T) um die Reifendrehachse (j) herum umfasst,
eine Mehrzahl von Laserabstandsmessvorrichtungen (5), die entlang der axialen Richtung des Reifens (T) angeordnet und in Richtung des Laufflächenabschnitts des Reifens (T) orientiert sind, um Abstände zu dem Laufflächenabschnitt zu messen,
**dadurch gekennzeichnet, dass** das System ferner eine Isolierwand (7), die die Laserabstandsmessvorrichtungen (5) umschließt,
wobei die Isolierwand (7) mit einer Öffnung (13) versehen ist, durch die Laserstrahlen (L) der Laserabstandsmessvorrichtungen (5) hindurchtreten können, und einem Verschluss (14), der ausgestaltet ist, um die Öffnung (13) zu verschließen, und
einen Temperaturcontroller (6) zum Steuern der Temperatur eines die Laserabstandsmessvorrichtungen (5) in der Isolierwand (7) umgebenden Gases umfasst,
wobei der Temperaturcontroller (6) ein Kühlsystem umfasst und ausgestaltet ist, um kontinuierlich temperaturgesteuerte Luft dem Inneren der Isolierwand (7) zuzuführen, wenn die Öffnung (13) durch Abnahme des Verschlusses (14) freigelegt ist.

2. Verfahren zum Messen eines Laufflächenprofils eines Reifens (T) unter Verwendung des Systems (1) nach Anspruch 1, das ein Halten der Temperatur des die Laserabstandsmessvorrichtungen (5) in der Isolierwand (7) umgebenden Gases auf einer im Wesentlichen konstanten Temperatur unter Verwendung des Temperaturcontrollers (6) umfasst, um Schwankungen von durch die Laserabstandsmessvorrichtungen (5) ausgegebenen Daten aufgrund von Schwankungen der Temperatur der Laserabstandsmessvorrichtungen (5) zu verringern.

3. Verfahren zum Messen eines Laufflächenprofils eines Reifens (T) nach Anspruch 2, wobei die im Wesentlichen konstante Temperatur eine vorgegebene Solltemperatur plus/minus 1 Grad C ist.

## Revendications

1. Système (1) pour mesurer un profil de la bande de roulement d'un pneumatique (T) comprenant :
un dispositif de maintien de pneumatique (2) comprenant un arbre de support de pneumatique (4) pour supporter le pneumatique (T) avec faculté de rotation autour de l'axe de rotation (j) du pneumatique,
une pluralité de dispositifs de mesure de distance à laser (5) agencés le long de la direction axiale du pneumatique (T) et orientés vers la portion formant bande de roulement du pneumatique (T) afin de mesurer des distances vers la portion formant bande de roulement,
**caractérisé en ce que** le système comprend en outre
une paroi isolante (7) qui enferme les dispositifs de mesure de distance à laser (5),
la paroi isolante (7) est dotée d'une ouverture (13) à travers laquelle des faisceaux laser (L) des dispositifs de mesure de distance à laser (5) peuvent passer, et un obturateur (14) configuré pour fermer l'ouverture (13), et
un contrôleur de température (6) pour commander la température d'un gaz entourant les dispositifs de mesure de distance à laser (5) dans la paroi isolante (7),
dans lequel le contrôleur de température (6) inclut un système de refroidissement et est configuré pour alimenter en continu de l'air à température contrôlée vers l'intérieur de la paroi isolante (7) quand l'ouverture (13) est découverte en enlevant l'obturateur (14).

2. Procédé pour mesurer un profil de la bande de roulement d'un pneumatique (T) en utilisant le système (1) selon la revendication 1, comprenant les étapes consistant à
maintenir la température du gaz entourant les dispositifs de mesure de distance à laser (5) dans la paroi isolante (7) à une température sensiblement constante en utilisant le contrôleur de température (6) de manière à réduire les variations des données délivrées par les dispositifs de mesure de distance à laser (5) en raison de variations de la température des dispositifs de mesure de distance à laser (5).

3. Procédé pour mesurer le profil d'une bande de roulement d'un pneumatique (T) selon la revendication 2, dans lequel ladite température sensiblement constante est une température ciblée préétablie plus/moins 1 °C.
